# EUROPEAN PATENT APPLICATION

(11) **EP 3 859 991 A1**
(43) Date of publication of application: **04.08.2021**
(21) Application number: 18935769.2
(22) Date of filing: 28.09.2018
(51) Int. Cl.: H04B 7/06

(54) **USER TERMINAL AND WIRELESS COMMUNICATION METHOD**

(71) Applicant: NTT DoCoMo, Inc., Tokyo 100-6150 (JP)
(72) Inventor: OKAMURA, Masaya, Tokyo 100-6150 (JP); HARADA, Hiroki, Tokyo 100-6150 (JP); MATSUMURA, Yuki, Tokyo 100-6150 (JP)
(74) Representative: Hoffmann Eitle
(86) International application number: PCT/JP2018/036540
(87) International publication number: WO 2020/066007

(57) **Abstract**

A user terminal according to one aspect of the present disclosure includes: a receiving section that receives information related to a Transmitted Precoding Matrix Indicator (TPMI) and information related to a Sounding reference signal Resource Index (SRI); and a control section that controls digital precoding to be applied to uplink transmission based on the information related to the TPMI, and controls analog precoding to be applied to the uplink transmission based on the information related to the SRI. According to one aspect of the present disclosure, it is possible to suitably perform UL transmission even when multiple panels are used.

## Description

### Technical Field

The present disclosure relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (Third Generation Partnership Project (3GPP) Releases (Rel.) 8 and 9), LTE-Advanced (3GPP Rel. 10 to 14) has been specified.

Successor systems to LTE (also referred to as, for example, the 5th generation mobile communication system (5G), 5G+ (plus), New Radio (NR), or 3GPP Rel. 15 or subsequent releases) are also being studied.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

A future radio communication system (e.g., NR) has a wide range of usages of a Sounding Reference Signal (SRS). One or a plurality of SRS resources may be configured to a UE, and the SRS resource may be specified based on an SRS Resource Index (SRI).

Furthermore, it is studied for NR that the UE performs UL transmission (e.g., PUSCH transmission) to one or a plurality of Transmission/Reception Points (TRPs) by using a plurality of panels (multiple panels).

By the way, NR specifications made so far specify that, when codebook-based transmission is configured, a UE determines a precoder to be applied across antenna ports based on a Transmitted Precoding Matrix Indicator (TPMI), and, furthermore, the precoder is associated with SRS resources determined (or selected) based on SRIs.

However, according to the NR specifications made so far, only one TPMI and one SRI for UL transmission is indicated to the UE in a certain time. Hence, even during simultaneous UL transmission that uses multiple panels, the same digital precoding (digital beam forming) and the same analog precoding (analog beam forming) can only be applied to all panels.

Accordingly, complying with the current NR specifications causes a risk that it is not possible to suitably realize a spatial diversity gain and high rank transmission when the multiple panels are used, and an increase in a communication throughput is suppressed.

It is therefore one of objects of the present disclosure to provide a user terminal and a radio communication method that can suitably perform UL transmission even when multiple panels are used.

### Solution to Problem

A user terminal according to one aspect of the present disclosure includes: a receiving section that receives information related to a Transmitted Precoding Matrix Indicator (TPMI) and information related to a Sounding reference signal Resource Index (SRI); and a control section that controls digital precoding to be applied to uplink transmission based on the information related to the TPMI, and controls analog precoding to be applied to the uplink transmission based on the information related to the SRI.

### Advantageous Effects of Invention

According to one aspect of the present disclosure, it is possible to suitably perform UL transmission even when multiple panels are used.

### Brief Description of Drawings

Fig. 1 is a diagram illustrating one example of a UE configuration according to embodiment 1-1.
Fig. 2 is a diagram illustrating one example of a UE configuration according to embodiment 1-2.
Fig. 3 is a diagram illustrating one example of a UE configuration according to embodiment 2-1.
Fig. 4 is a diagram illustrating one example of a UE configuration according to embodiment 2-2.
Fig. 5 is a diagram illustrating one example of a schematic configuration of a radio communication system according to one embodiment.
Fig. 6 is a diagram illustrating one example of a configuration of a base station according to the one embodiment.
Fig. 7 is a diagram illustrating one example of a configuration of a user terminal according to the one embodiment.
Fig. 8 is a diagram illustrating one example of hardware configurations of the base station and the user terminal according to the one embodiment.

### Description of Embodiments

### (SRS)

NR has a wide range of usages of a Sounding Reference Signal (SRS). The SRS of NR is used not only for CSI measurement on UL used by legacy LTE (LTE Rel. 8 to 14), too, but also for CSI measurement and beam management on DL and so on.

One or a plurality of SRS resources may be configured to a UE. The SRS resource may be specified based on an SRS Resource Index (SRI).

Each SRS resource may include one or a plurality of SRS ports (may be associated with one or a plurality of SRS ports). For example, the number of ports per SRS may be 1, 2, 4 and so on.

One or a plurality of SRS resource sets may be configured to the UE. One SRS resource set may be associated with a given number of SRS resources. The UE may commonly use a higher layer parameter for SRS resources included in one SRS resource set. Note that, in the present disclosure, a resource set may be read as a resource group or simply as a group.

Information related to the SRS resource set and/or the SRS resources may be configured to the UE by using a higher layer signaling, a physical layer signaling or a combination of these signalings. In this regard, the higher layer signaling may be one or a combination of, for example, a Radio Resource Control (RRC) signaling, a Medium Access Control (MAC) signaling and broadcast information.

The MAC signaling may use, for example, an MAC Control Element (MAC CE) or an MAC Protocol Data Unit (PDU). The broadcast information may be, for example, a Master Information Block (MIB), a System Information Block (SIB), Remaining Minimum System Information (RMSI), or Other System Information (OSI) and so on.

The physical layer signaling may be, for example, Downlink Control Information (DCI).

SRS configuration information (e.g., RRC information element "SRS-Config") may include SRS resource set configuration information, SRS resource configuration information and so on.

The SRS resource set configuration information (e.g., RRC parameter "SRS-ResourceSet") may include information of SRS resource set Identifiers (IDs) (SRS-ResourceSetId), a list of SRS resource IDs (SRS-ResourceId) used for the SRS resource set, an SRS resource type and an SRS usage.

In this regard, the SRS resource type may indicate one of a Periodic SRS (P-SRS), a Semi-Persistent SRS (SP-SRS) and an Aperiodic SRS (A-SRS). Note that, the UE may transmit the P-SRS and the SP-SRS periodically (or periodically after activation), and transmit the A-SRS based on an SRS request of DCI.

Furthermore, the SRS usage (an RRC parameter "usage" or a Layer-1 (LI) parameter "SRS-SetUse") may be, for example, beam management, a codebook, a non-codebook, antenna switching and so on. An SRS used for the codebook or the non-codebook may be used to determine a precoder of codebook-based or non-codebook-based PUSCH transmission based on an SRI.

Regarding an SRS used for beam management, it may be assumed that only one SRS resource of each SRS resource set is transmissible at a given time instant. Note that, when a plurality of SRS resources each belong to respectively different SRS resource sets, these SRS resources may be simultaneously transmitted.

The SRS resource configuration information (e.g., RRC parameter "SRS-Resource") may include SRS resource IDs (SRS-ResourceId), the number of SRS ports, SRS port numbers, transmission Comb, SRS resource mapping (e.g., time and/or frequency resource positions, a resource offset, a resource periodicity, a repetition factor, the number of SRS symbols, an SRS bandwidth and so on), hopping relation information, an SRS resource type, sequence IDs and spatial relation information and so on.

The UE may transmit an SRS in neighboring symbols the number of which corresponds to the number of SRS symbols among last 6 symbols in 1 slot. Note that, the number of SRS symbols may be 1, 2, 4 and so on.

The UE may switch a Bandwidth Part (BWP) for transmitting an SRS per slot, or may switch an antenna. Furthermore, the UE may apply at least one of intra-slot hopping and inter-slot hopping to SRS transmission.

As transmission Comb of an SRS, Interleaved Frequency Division Multiple Access (IFDMA) that uses Comb2 (that arranges SRSs every other 2 Resource Elements (REs)) or Comb4 (that arranges SRSs every other 4 REs), and a Cyclic Shift (CS) may be applied.

The spatial relation information of the SRS (RRC parameter "spatialRelationInfo") may indicate spatial relation information between a given reference signal and the SRS. The given reference signal may be at least one of a Synchronization Signal/Physical Broadcast Channel (SS/PBCH) block, a Channel State Information Reference Signal (CSI-RS) and an SRS (e.g., another SRS). In addition, the SS/PBCH block may be referred to as a Synchronization Signal Block (SSB).

The spatial relation information of the SRS may include at least one of an SSB index, a CSI-RS resource ID and an SRS resource ID as an index of the above given reference signal. Note that, in the present disclosure, the SSB index, the SSB resource ID and an SSB Resource Indicator (SSBRI) may be interchangeably read. Furthermore, the CSI-RS index, the CSI-RS resource ID and a CSI-RS Resource Indicator (CRI) may be interchangeably read. Furthermore, the SRS index, the SRS resource ID and the SRI may be interchangeably read.

The spatial relation information of the SRS may include a serving cell index, a BWP index (BWP ID) and so on, associated with the given reference signal mentioned above.

When, for a certain SRS resource, spatial relation information related to an SSB or a CSI-RS and the SRS is configured to the UE, the UE may transmit the certain SRS resource by using the same spatial domain filter as a spatial domain filter for receiving the SSB or the CSI-RS. That is, in this case, the UE may assume that a UE reception beam of the SSB or the CSI-RS and a UE transmission beam of the SRS are the same.

When, for a certain SRS (target SRS) resource, spatial relation information related to another SRS (reference SRS) and the certain SRS (target SRS) is configured to the UE, the UE may transmit the target SRS resource by using the same spatial domain filter as the spatial domain filter for transmitting the reference SRS. That is, in this case, the UE may assume that a UE transmission beam of the reference SRS and a UE transmission beam of the target SRS are the same.

Note that, the spatial domain filter for transmission from a base station, a downlink spatial domain transmission filter and a transmission beam from the base station may be interchangeably read. The spatial domain filter for reception at the base station, an uplink spatial domain receive filter and a reception beam at the base station may be interchangeably read.

Furthermore, the spatial domain filter for transmission from the UE, an uplink spatial domain transmission filter and a transmission beam from the UE may be interchangeably read. The spatial domain filter for reception at the UE, a downlink spatial domain receive filter and a reception beam at the UE may be interchangeably read.

A beam instruction for a PUCCH may be configured by a higher layer signaling (PUCCH spatial relation information of RRC (PUCCH-Spatial-relation-info)). When, for example, the PUCCH spatial relation information includes one spatial relation information (SpatialRelationInfo) parameter, the UE may apply the configured parameter to the PUCCH. When the PUCCH spatial relation information includes two or more spatial relation information parameters, the UE may determine a parameter to be applied to the PUCCH based on an MAC CE.

A beam instruction for a PUSCH may be decided based on an SRS Resource Indicator (SRI) field included in DCI. The UE may transmit the PUSCH by using the same transmission beam as a corresponding SRS based on the indicated SRI.

### (Multiple Panels)

It is studied for NR that the UE performs UL transmission (e.g., PUSCH transmission) to one or a plurality of Transmission/Reception Points (TRPs) by using a plurality of panels (multiple panels).

When, for example, the UE performs UL transmission to multiple TRPs by using multiple panels, and when each TRP interval is sufficient, a spatial correlation of each channel becomes small, so that it is possible to expect that a spatial diversity gain is obtained.

Furthermore, when, for example, the UE performs UL transmission to a single TRP by using multiple panels, and when the number of panels of the UE is large, it is possible to realize higher rank UL transmission.

By the way, NR specifications made so far specify that, when codebook-based transmission is configured, the UE determines a precoder (that may be read as a precoding matrix) to be applied across antenna ports based on a Transmitted Precoding Matrix Indicator (TPMI), and, furthermore, the precoder is associated with SRS resources determined (or selected) based on SRIs. Note that, when one SRS resource is configured, the precoder is associated with the one SRS resource.

However, according to the NR specifications made so far, only one TPMI and one SRI for UL transmission is indicated to the UE in a certain time. Hence, even during simultaneous UL transmission that uses multiple panels, the same digital precoding (digital beam forming) and the same analog precoding (analog beam forming) can only be applied to all panels.

Accordingly, complying with the current NR specifications causes a risk that it is not possible to suitably realize a spatial diversity gain, high rank transmission and so on, when the multiple panels are used, and an increase in a communication throughput is suppressed.

Hence, the inventors of the present disclosure have conceived UL transmission control based on a plurality of TPMIs or a plurality of SRIs.

According to one aspect of the present disclosure, it is possible to simultaneously transmit UL analog beams using a plurality of panels by notifying the UE of a plurality of SRIs. Consequently, it is possible to obtain a spatial diversity gain in a case where a spatial correlation of each channel is small, and expect that higher rank UL transmission is realized.

Furthermore, according to one aspect of the present disclosure, it is possible to apply digital precoding that is suitable to a channel of each beam by notifying the UE of a plurality of TPMIs. Consequently, it is possible to expect that higher rank UL transmission is realized.

Embodiments according to the present disclosure will be described in detail below with reference to the drawings. A radio communication method according to each embodiment may be each applied alone, or may be applied in combination.

The following embodiments will describe cases where UL transmission performed by using beams is PUSCH transmission, yet are not limited to these. The embodiments of the present disclosure include contents, too, in which PUSCH transmission is replaced with transmission of other channels (such as a PUCCH), signals (such as a DMRS) and others.

### (Radio Communication Method)

According to one embodiment, when being notified of information of a Transmitted Precoding Matrix Indicator (TPMI) from a base station, the UE assumes to perform digital precoding based on the TPMI. When being notified of information of an SRI, the UE assumes to perform analog precoding based on the SRI, and then transmit a PUSCH.

The UE may determine one or a plurality of TPMIs used for PUSCH transmission based on one or a plurality of precoding information and number of layers fields included in DCI. The UE may determine one or a plurality of SRIs used for PUSCH transmission based on one or a plurality of SRI fields included in DCI.

Note that, a method for determining SRIs, TPMIs and so on used for PUSCH transmission is not limited to this. At least ones of the SRIs and the TPMIs may be configured or indicated to the UE based on a higher layer signaling, a physical layer signaling or a combination of these signalings.

When being notified of one SRI, the UE assumes to apply the same analog precoding to all panels at a time of PUSCH transmission.

When, for example, being notified of one SRI and one TPMI, the UE may assume to apply one (same) digital precoding to all layers, and apply the same analog precoding to each panel (referred to as embodiment 1-1 below).

When, for example, being notified of one SRI and a plurality of TPMIs, the UE may assume to apply digital precoding in a layer group unit, and apply the same analog precoding to each panel (referred to as embodiment 1-2 below).

When being notified of a plurality of SRIs, the UE assumes to apply independently (e.g., different) analog precoding per panel at a time of PUSCH transmission.

When, for example, being notified of a plurality of SRIs and one TPMI, the UE may assume to apply one (same) digital precoding to all layers, and apply different analog precoding to each panel (referred to as embodiment 2-1 below).

When, for example, being notified of a plurality of SRIs and a plurality of TPMIs, the UE may assume to apply digital precoding in a layer group unit, and apply different analog precoding to each panel (referred to as embodiment 2-2 below).

### <Embodiment 1-1>

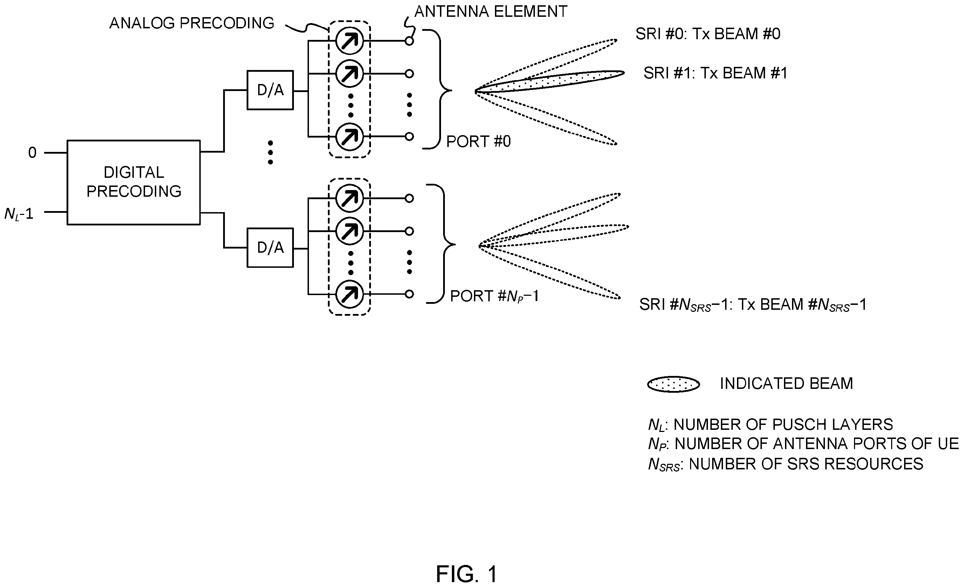

Fig. 1 is a diagram illustrating one example of a UE configuration according to embodiment 1-1. In Fig. 1, N_{L} represents the number of PUSCH layers, N_{P} represents the number of antenna ports of a UE that are available for a PUSCH, and N_{SRS} represents the number of SRS resources. These parameters are the same in subsequent drawings.

A plurality of antenna elements associated with one antenna port may be associated with one or a plurality of panels. In Fig. 1, transmission beams (Tx beams) are associated with different indices (#0 to #N_{NRS}-1) according to SRI values. Note that, there may be a case where different indices of transmission beams mean the same beam.

In this example, the UE applies the same digital precoding to all layers (all of a layer 0 to a layer N_{L}-1) based on one TPMI indicated by DCI. After applying the digital precoding, the UE performs digital-analog (D/A) conversion, and generates a signal per antenna port.

The UE transmits a PUSCH by using a transmission beam (a Tx beam #1 in Fig. 1) of one antenna port (a port #0 in Fig. 1) based on one SRI (an SRI #1 in Fig. 1) indicated by DCI. The UE applies the same analog precoding to each panel.

Note that, although described below in embodiment 2-1, the UE may transmit a PUSCH by using transmission beams of a plurality of antenna ports based on one SRI in embodiment 1-1, too.

### <Embodiment 1-2>

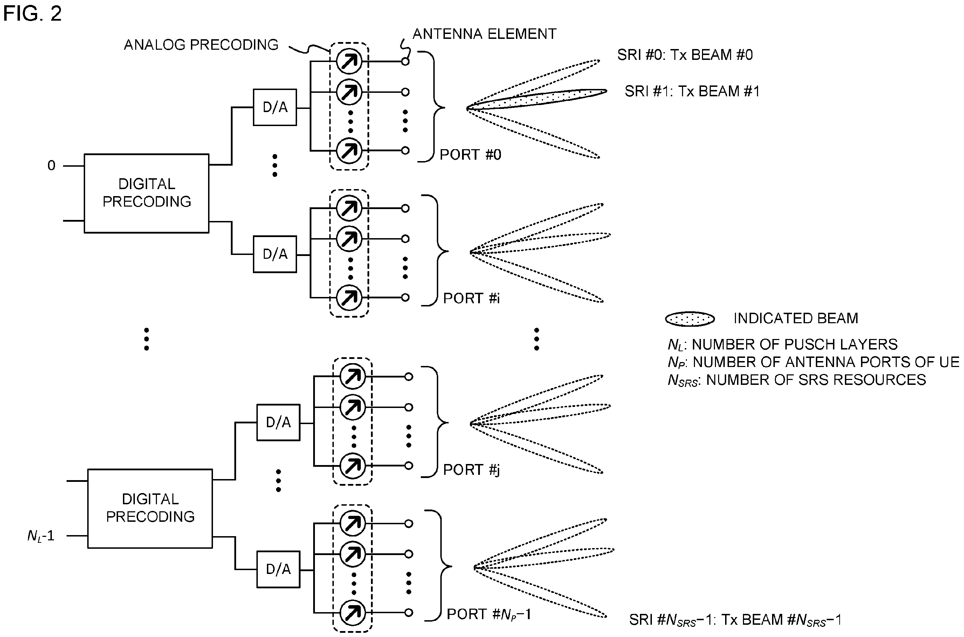

Fig. 2 is a diagram illustrating one example of a UE configuration according to embodiment 1-2. Configurations or control whose description will be omitted may be the same as the configurations or the control described with reference to Fig. 1.

In this example, the UE applies digital precoding in a layer group unit based on a plurality of notified TPMIs. After applying the digital precoding, the UE performs digital-analog (D/A) conversion, and generates a signal per antenna port.

The UE may determine a precoder to be applied across part of antenna ports among antenna ports of the UE that are available for a PUSCH based on a certain TPMI, and determine a precoder to be applied across other part of antenna ports based on another TPMI.

Note that, a plurality of TPMIs may be configured (notified) by a higher layer signaling, may be instructed (notified) by a physical layer signaling (DCI), or may be notified by using a combination of these signalings. For example, part of a plurality of TPMIs used for PUSCH transmission may be notified by the DCI, and the remaining may be notified by an RRC or MAC signaling.

The UE transmits a PUSCH by using a transmission beam (the Tx beam #1 in Fig. 2) of one antenna port (the port #0 in Fig. 2) based on one SRI (the SRI #1 in Fig. 2) indicated by DCI. The UE applies the same analog precoding to each panel.

A relation between each TPMI to be notified and a precoding matrix may be specified by a specification, or may be configured to the UE by a higher layer signaling.

A precoding matrix to be applied to one or a plurality of layer groups may be determined based on one TPMI. The UE may determine layers (or the number of layers) included in each layer group based on a size (e.g., column size) of the precoding matrix that is referred to based on the TPMI, or may determine the layers based on the notified number of TPMIs.

A case is assumed as one example where three TPMIs (first to third TPMIs) are indicated to the UE. Hereinafter, it is assumed that the number of UL layers is 8, and the number of antenna ports associated with each layer group (i.e., digital precoding) is 4. Furthermore, it is assumed that the first TPMI is associated with a precoding matrix of 4 in row size × 2 in column size, the second TPMI is associated with a precoding matrix of 4 in row size × 4 in column size, and the third TPMI is associated with a precoding matrix of 4 in row size × 2 in column size.

In this case, the UE may assume that a first layer group (e.g., layer group #0) associated with the first TPMI includes the layers #0 and #1, and determine a precoding matrix to apply to the first layer group based on the first TPMI.

Furthermore, the UE may assume that a second layer group (e.g., layer group #1) associated with the second TPMI includes the layers #2 to #5, and determine a precoding matrix to apply to the second layer group based on the second TPMI.

Furthermore, the UE may assume that a third layer group (e.g., layer group #2) associated with the third TPMI includes the layers #6 and #7, and determine a precoding matrix to apply to the third layer group based on the third TPMI.

A case is assumed as another example where two TPMIs (first and second TPMIs) are indicated to the UE. Hereinafter, it is assumed that the number of UL layers is 8.

The UE may determine the number of layer groups based on the notified number of TPMIs (for example, assume the number of layer groups = the notified number of TPMIs), and determine the number of layers included in each layer group based on the number of UL layers and the number of layer groups.

In this case, the UE may assume that the first layer group associated with the first TPMI includes the layers #0 to #3 (3 = (a value obtained by dividing the number of UL layers by the number of TPMIs) - 1), and determine a precoding matrix to apply to the first layer group based on the first TPMI.

Furthermore, the UE may assume that the second layer group associated with the second TPMI includes the layers #4 to #7, and determine a precoding matrix to apply to the second layer group based on the second TPMI.

In addition, a plurality of digital precoding may be applied to 1 layer. A case is assumed as still another example where two TPMIs (first and second TPMIs) are indicated. Hereinafter, it is assumed that the number of UL layers is 4.

The UE may determine the number of layer groups based on the notified number of TPMIs (for example, assume the number of layer groups = the notified number of TPMIs), and determine the number of layers included in each layer group based on the number of UL layers and the number of layer groups.

In this case, the UE may assume that the first layer group associated with the first TPMI includes the layers #0 to #2, and determine a precoding matrix to apply to the first layer group based on the first TPMI. Furthermore, the UE may assume that the second layer group associated with the second TPMI includes the layers #1 to #3, and determine a precoding matrix to apply to the second layer group based on the second TPMI.

In this example, both of the precoding matrix based on the first TPMI and the precoding matrix based on the second TPMI are applied to the layers #1 and #2.

Note that, a method for determining layers (the number of layers) included in a layer group is not limited to the above-described contents. For example, indices of layers included in one layer group may not be contiguous.

### <Embodiment 2-1>

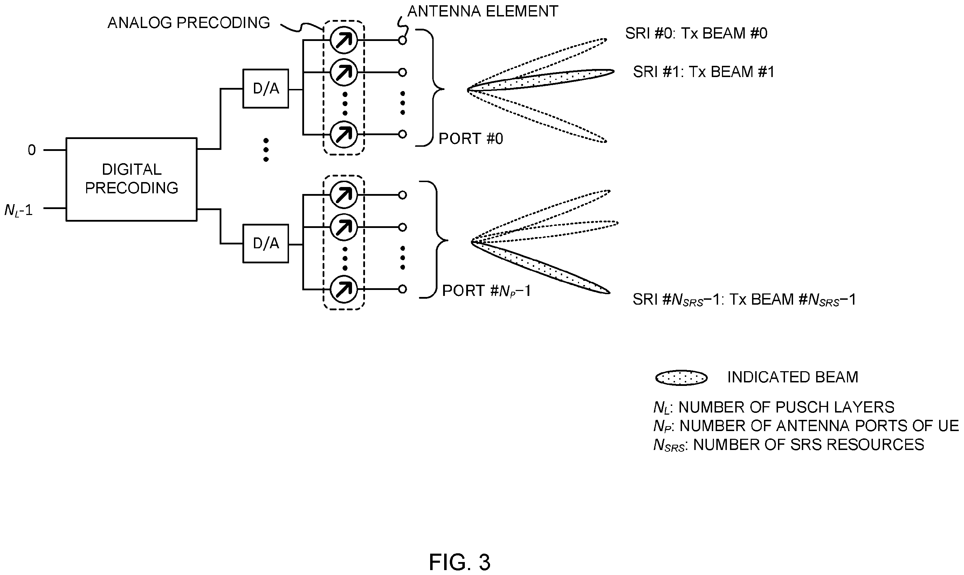

Fig. 3 is a diagram illustrating one example of a UE configuration according to embodiment 2-1. Configurations or control whose description will be omitted may be the same as the configurations or the control described with reference to Fig. 1.

In this example, a UE applies the same digital precoding to all layers (all of a layer 0 to a layer N_{L}-1) based on one TPMI indicated by DCI. After applying the digital precoding, the UE performs digital-analog (D/A) conversion, and generates a signal per antenna port.

The UE transmits a PUSCH by using transmission beams (Tx beams #1 and #N_{SRS}-1 in Fig. 3) of a plurality of antenna ports (ports #0 and #N_{P}-1 in Fig. 3) based on a plurality of notified SRIs (SRIs #1 and #N_{SRS}-1 in Fig. 3). The UE applies different analog precoding to each panel.

Note that, a plurality of SRIs may be configured (notified) by a higher layer signaling, may be instructed (notified) by a physical layer signaling (DCI), or may be notified by using a combination of these signalings. For example, part of a plurality of SRIs used for PUSCH transmission may be notified by the DCI, and the remaining may be notified by an RRC or MAC signaling.

Furthermore, candidate SRIs may be configured to the UE by the RRC signaling, and a specific SRI of the candidate SRIs may be indicated by the DCI. Candidate SRIs may be configured to the UE by the RRC signaling, the candidate SRIs are restricted to part of SRIs of the candidate SRIs (the part of SRIs are instructed) by the MAC signaling (e.g., MAC CE), and a specific SRI of the part of SRIs restricted by the MAC signaling may be indicated by the DCI.

The UE may assume that one SRI is associated with one antenna port, or may assume that one SRI is associated with a plurality of antenna ports. Fig. 3 is based on the former assumption.

Regarding the latter assumption, the antenna ports (or the number of antenna ports) associated with respective notified SRIs may be specified by a specification, may be configured by a higher layer signaling, or may be determined by the UE based on the number of antenna ports N_{P} that are available for a PUSCH, and the notified number of SRIs. The antenna ports associated with the SRIs may be referred to as a port group.

When, for example, N_{P} = 16 holds (the UE includes antenna ports #0 to #15), and when two SRIs (a first SRI and a second SRI) are notified, the UE may apply analog precoding that is based on the first SRI to a first port group (e.g., ports #0 to #7), and apply analog precoding that is based on the second SRI to a second port group (e.g., ports #8 to #15).

The number of ports included in a port group may be determined so as to differ per port group based on a total number of antenna ports (e.g., N_{P}). In this case, it is preferred that SRIs that can be indicated are increased, and SRS resource set IDs, SRS resource IDs and so on configured to the UE by a higher layer signaling may be changed from the specification of Rel-15 NR.

For example, according to Rel-15 NR, a maximum value (RRC parameter "maxNrofSRS-ResourceSets-1") of SRS resource set IDs per BWP is 15, and a maximum value (RRC parameter "maxNrofSRS-Resources-1 ") of SRS resource IDs per BWP is 63. However, larger values than these maximum values may be each used for the SRS resource set IDs and the SRS resource set IDs.

### <Embodiment 2-2>

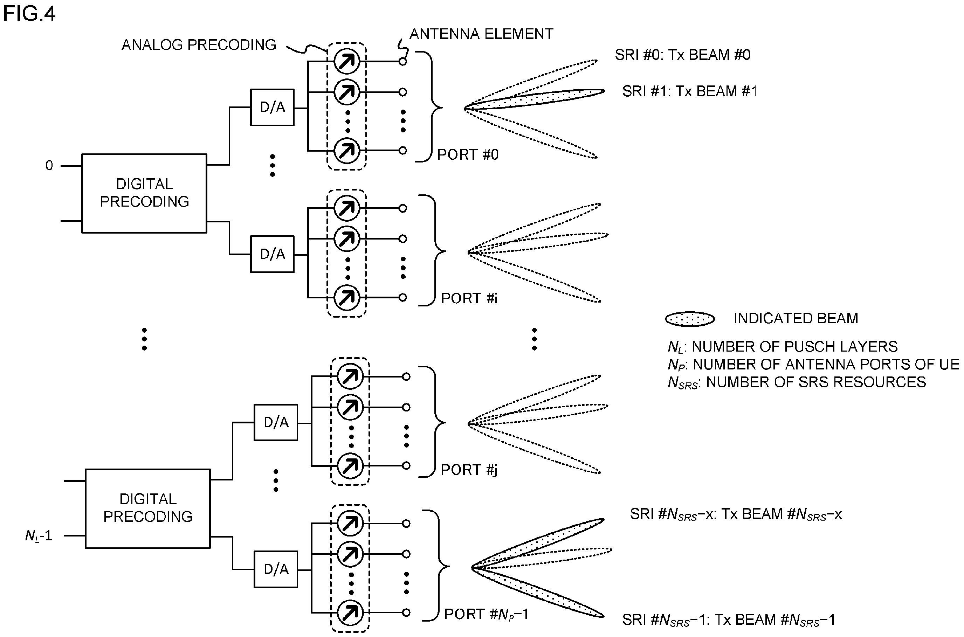

Fig. 4 is a diagram illustrating one example of a UE configuration according to embodiment 2-2. Configurations or control whose description will be omitted may be the same as the configurations or the control described with reference to at least one of Figs. 1 to 3.

In this example, the UE applies digital precoding in a layer group unit based on a plurality of notified TPMIs. After applying the digital precoding, the UE performs digital-analog (D/A) conversion, and generates a signal per antenna port.

The UE transmits a PUSCH by using transmission beams (Tx beams #1, #N_{NRS}-x and #N_{SRS}-1 in Fig. 4) of a plurality of antenna ports (the ports #0 and #N_{P}-1 in Fig. 4) based on a plurality of notified SRIs (SRIs #1, #N_{NRS}-x and #N_{SRS}-1 in Fig. 4). The UE applies different analog precoding to each panel.

The UE may assume that one notified SRI is associated with one antenna port, or may assume that one notified SRI is associated with a plurality of antenna ports. The UE may assume that one notified TPMI is associated with one SRI, or may assume that one notified TPMI is associated with a plurality of SRIs.

Note that, a plurality of digital precoding may be applied to 1 layer. A case is assumed as one example where two TPMIs (first and second TPMIs) are indicated. Hereinafter, it is assumed that the number of UL layers is 4.

The UE may determine the number of layer groups based on the notified number of TPMIs (for example, assume the number of layer groups = the notified number of TPMIs), and determine the number of layers included in each layer group based on the number of UL layers and the number of layer groups.

In this case, the UE may assume that the first layer group associated with the first TPMI includes the layers #0 to #2, and determine a precoding matrix to apply to the first layer group based on the first TPMI. The UE may apply analog precoding to the layers #0 to #2 based on the first SRI.

Furthermore, the UE may assume that the second layer group associated with the second TPMI includes the layers #1 to #3, and determine a precoding matrix to apply to the second layer group based on the second TPMI. The UE may apply analog precoding to the layers #1 to #3 based on the second SRI.

In this example, both of the precoding matrix based on the first TPMI and the precoding matrix based on the second TPMI are applied to the layers #1 and #2. Furthermore, both of the analog precoding based on the first SRI and the analog precoding based on the second SRI are applied to the layers #1 and #2.

According to the above-described embodiments, even in a case where multiple panels are mounted on the UE, it is possible to suitably control precoding of UL transmission that uses the multiple panels.

### <Others>

In addition, analog precoding, digital precoding and precoding (that includes analog/digital precoding) in the present disclosure may be interchangeably read.

The control described in the above-described embodiments 1-1 to 2-2 may be applied to a case where a UE does not have a beam correspondence. In a case where the UE has the beam correspondence (or has UE capability of the beam correspondence or has reported that the UE has the UE capability), the UE may perform UL transmission by using the same beam as a beam used for DL reception, or may apply UL transmission beam determination described in the above-described embodiments to part of panels.

In a case where the UE has the correspondence, the UE may assume that following (1) and/or (2) are satisfied: (1) The UE can determine a transmission beam of a UE for uplink transmission based on downlink measurement of the UE that uses one or more reception beams, and (2) The UE can determine a reception beam of the UE for downlink reception based on an instruction of a base station that is based on uplink measurement of the base station that uses one or more transmission beams.

Furthermore, in a case where the base station has the correspondence, the base station may assume that following (3) and/or (4) are satisfied: (3) The base station can determine a reception beam of the base station for uplink reception based on downlink measurement of the UE that uses one or more transmission beams, and (4) The base station can determine a transmission beam of the base station for downlink transmission based on uplink measurement of the base station that uses one or more reception beams.

That is, the UE or the base station that has the beam correspondence may assume that transmission/reception beams match (or substantially match). Note that, the beam correspondence may be referred to as beam reciprocity or beam calibration or simply as a correspondence.

In a case where the UE includes a plurality of panels, the beam correspondence may be commonly applied to these panels, or may be applied individually per panel. In a case where the beam correspondence is determined individually per panel, UL transmission beam determination that is based on the above-described embodiments is applied to the panels that have the beam correspondence, and UL transmission beam determination that is based on a DL reception beam may be applied to the panels that do not have the beam correspondence.

### (Radio Communication System)

The configuration of the radio communication system according to one embodiment of the present disclosure will be described below. This radio communication system uses one or a combination of the radio communication method according to each of the above embodiments of the present disclosure to perform communication.

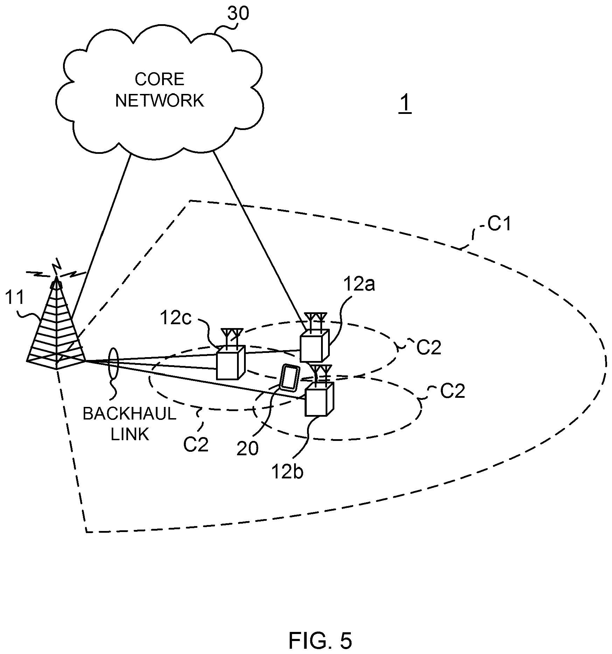

Fig. 5 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).

Furthermore, the radio communication system 1 may support dual connectivity (Multi-RAT Dual Connectivity (MR-DC)) between a plurality of Radio Access Technologies (RATs). MR-DC may include dual connectivity (EN-DC: E-UTRA-NR Dual Connectivity) of LTE (E-UTRA: Evolved Universal Terrestrial Radio Access) and NR, and dual connectivity (NE-DC: NR-E-UTRA Dual Connectivity) of NR and LTE.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NN-DC: NR-NR Dual Connectivity) where both of the MN and the SN are base stations (gNBs) according to NR).

The radio communication system 1 includes a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 5. The base stations 11 and 12 will be collectively referred to as a base station 10 below when not distinguished.

The user terminal 20 may connect with at least one of a plurality of base stations 10. The user terminal 20 may use at least one of Carrier Aggregation and Dual Connectivity (DC) that uses a plurality of Component Carriers (CCs).

Each CC may be included in at least one of a first frequency range (FR1: Frequency Range 1) and a second frequency range (FR2: Frequency Range 2). The macro cell C1 may be included in the FR1, and the small cell C2 may be included in the FR2. For example, the FR1 may be a frequency range equal to or less than 6 GHz (sub-6 GHz), and the FR2 may be a frequency range higher than 24 GHz (above-24 GHz). In addition, the frequency ranges and definitions of the FR1 and the FR2 are not limited to these, and for example, the FR1 may correspond to a frequency range higher than the FR2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI) or an X2 interface) or radio connection (e.g., NR communication). When, for example, NR communication is used as backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the another base station 10 or directly. The core network 30 may include at least one of, for example, an Evolved Packet Core (EPC), a 5G Core Network (5GCN) and a Next Generation Core (NGC).

The user terminal 20 is a terminal that supports at least one of communication schemes such as LTE, LTE-A and 5G.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (PDSCH: Physical Downlink Shared Channel) shared by each user terminal 20, a broadcast channel (PBCH: Physical Broadcast Channel) and a downlink control channel (PDCCH: Physical Downlink Control Channel) as downlink channels.

Furthermore, the radio communication system 1 uses an uplink shared channel (PUSCH: Physical Uplink Shared Channel) shared by each user terminal 20, an uplink control channel (PUCCH: Physical Uplink Control Channel) and a random access channel (PRACH: Physical Random Access Channel) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as a DL assignment or DL DCI, and DCI for scheduling the PUSCH may be referred to as a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a certain search space based on a search space configuration.

One SS may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Channel State Information (CSI), transmission acknowledgement information (that may be referred to as, for example, Hybrid Automatic Repeat reQuest ACKnowledgement (HARQ-ACK) or ACK/NACK) or a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 conveys a Cell-specific Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as an SS/PBCH block or an SS Block (SSB). In addition, the SS and the SSB may be also referred to as reference signals.

Furthermore, the radio communication system 1 may convey a Sounding Reference Signal (SRS) and a DeModulation Reference Signal (DMRS) as UpLink Reference Signals (UL-RSs). In this regard, the DMRS may be referred to as a user terminal-specific reference signal (UE-specific reference signal).

### (Base Station)

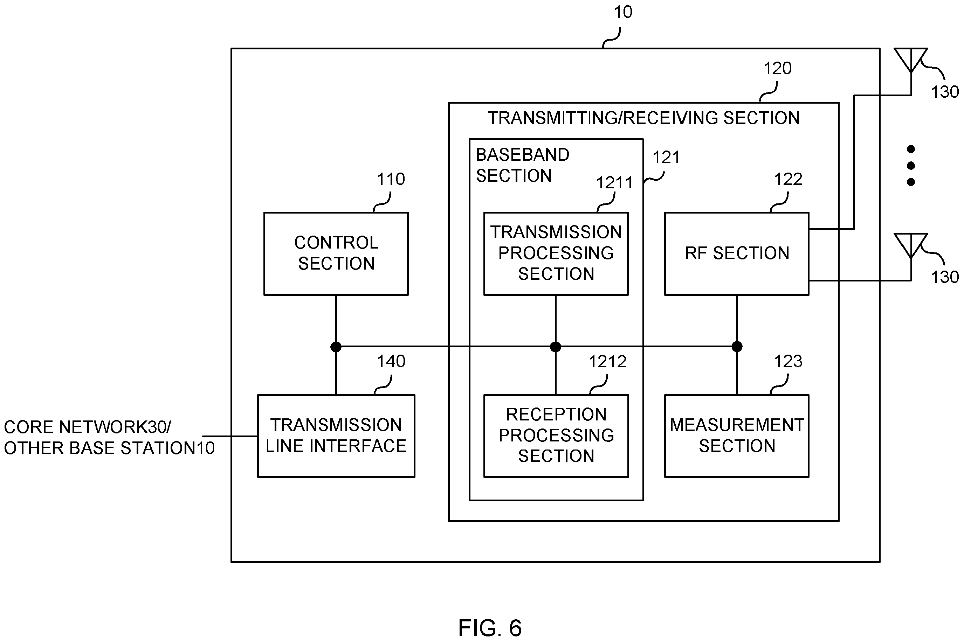

Fig. 6 is a diagram illustrating one example of a configuration of the base station according to the one embodiment. The base station 10 includes a control section 110, a transmitting/receiving section 120, transmission/reception antennas 130 and a communication path interface 140. In addition, the base station 10 may include one or more of each of the control sections 110, the transmitting/receiving sections 120, the transmission/reception antennas 130 and the communication path interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmission/reception and measurement that use the transmitting/receiving section 120, the transmission/reception antennas 130 and the communication path interface 140. The control section 110 may generate data, control information or a sequence to be transmitted as a signal, and forward the signal to the transmitting/receiving section 120. The control section 110 may perform call processing (such as configuration and release) of a communication channel, state management of the base station 10 and radio resource management.

The transmitting/receiving section 120 may include a baseband section 121, a Radio Frequency (RF) section 122 and a measurement section 123. The baseband section 121 may include a transmission processing section 1211 and a reception processing section 1212. The transmitting/receiving section 120 can be composed of a transmitter/receiver, an RF circuit, a baseband circuit, a filter, a phase shifter, a measurement circuit or a transmission/reception circuit described based on the common knowledge in the technical field according to the present disclosure.

The transmitting/receiving section 120 may be composed as an integrated transmitting/receiving section, or may be composed of a transmitting section and a receiving section. The transmitting section may be composed of the transmission processing section 1211 and the RF section 122. The receiving section may be composed of the reception processing section 1212, the RF section 122 and the measurement section 123.

The transmission/reception antenna 130 can be composed of an antenna such an array antenna described based on the common knowledge in the technical field according to the present disclosure.

The transmitting/receiving section 120 may transmit the above-described downlink channel, synchronization signal and downlink reference signal. The transmitting/receiving section 120 may receive the above-described uplink channel and uplink reference signal.

The transmitting/receiving section 120 may form at least one of a transmission beam and a reception beam by using digital beam forming (e.g., precoding) or analog beam forming (e.g., phase rotation).

The transmitting/receiving section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmitting/receiving section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmitting/receiving section 120 (RF section 122) may modulate the baseband signal into a radio frequency range, perform filter processing and amplification on the signal, and transmit the signal of the radio frequency range via the transmission/reception antennas 130.

On the other hand, the transmitting/receiving section 120 (RF section 122) may perform amplification and filter processing on the signal of the radio frequency range received by the transmission/reception antennas 130, and demodulate the signal into a baseband signal.

The transmitting/receiving section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmitting/receiving section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The communication path interface 140 may transmit and receive (backhaul signaling) signals to and from apparatuses and the other base stations 10 included in the core network 30, and obtain and convey user data (user plane data) and control plane data for the user terminal 20.

In addition, the transmitting section and the receiving section of the base station 10 according to the present disclosure may be composed of at least one of the transmitting/receiving section 120, the transmission/reception antenna 130 and the communication path interface 140.

In addition, the transmitting/receiving section 120 may transmit at least one of information related to TPMIs and information related to SRIs to the user terminal 20.

The control section 110 may assume that the user terminal 20 controls digital precoding to be applied to uplink transmission (such as PUSCH transmission) based on the information related to the TPMIs, and controls analog precoding to be applied to the uplink transmission based on the information related to the SRIs. The transmitting/receiving section 120 may receive an uplink signal or channel to which at least one of the digital precoding and the analog precoding has been applied.

### (User Terminal)

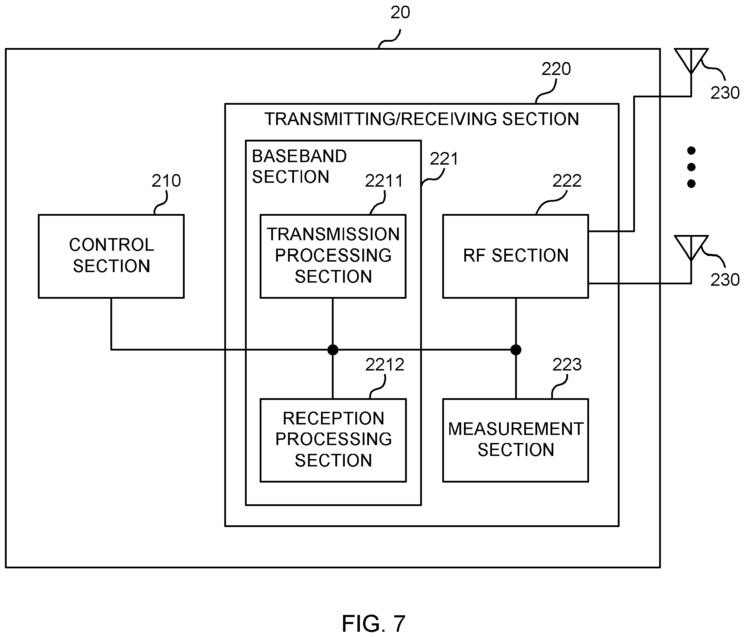

Fig. 7 is a diagram illustrating one example of a configuration of the user terminal according to the one embodiment. The user terminal 20 includes a control section 210, a transmitting/receiving section 220 and transmission/reception antennas 230. In this regard, the user terminal 20 may include one or more of each of the control sections 210, the transmitting/receiving sections 220 and the transmission/reception antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmitting/receiving section 220 and the transmission/reception antennas 230. The control section 210 may generate data, control information or a sequence to be transmitted as a signal, and forward the signal to the transmitting/receiving section 220.

The transmitting/receiving section 220 may include a baseband section 221, an RF section 222 and a measurement section 223. The baseband section 221 may include a transmission processing section 2211 and a reception processing section 2212. The transmitting/receiving section 220 can be composed of a transmitter/receiver, an RF circuit, a baseband circuit, a filter, a phase shifter, a measurement circuit or a transmission/reception circuit described based on the common knowledge in the technical field according to the present disclosure.

The transmitting/receiving section 220 may be composed as an integrated transmitting/receiving section, or may be composed of a transmitting section and a receiving section. The transmitting section may be composed of the transmission processing section 2211 and the RF section 222. The receiving section may be composed of the reception processing section 2212, the RF section 222 and the measurement section 223.

The transmission/reception antenna 230 can be composed of an antenna such an array antenna described based on the common knowledge in the technical field according to the present disclosure.

The transmitting/receiving section 220 may receive the above-described downlink channel, synchronization signal and downlink reference signal. The transmitting/receiving section 220 may transmit the above-described uplink channel and uplink reference signal.

The transmitting/receiving section 220 may form at least one of a transmission beam and a reception beam by using digital beam forming (e.g., precoding) or analog beam forming (e.g., phase rotation).

The transmitting/receiving section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmitting/receiving section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a certain channel (e.g., PUSCH), the transmitting/receiving section 220 (transmission processing section 2211) may perform the DFT processing as the above transmission processing to transmit the certain channel by using a DFT-s-OFDM waveform. When precoding is not enabled, the transmitting/receiving section 220 (transmission processing section 2211) may not perform the DFT processing as the above transmission processing.

The transmitting/receiving section 220 (RF section 222) may modulate the baseband signal into a radio frequency range, perform filter processing and amplification on the signal, and transmit the signal of the radio frequency range via the transmission/reception antennas 230.

On the other hand, the transmitting/receiving section 220 (RF section 222) may perform amplification and filter processing on the signal of the radio frequency range received by the transmission/reception antennas 230, and demodulate the signal into a baseband signal.

The transmitting/receiving section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmitting/receiving section 220 (measurement section 223) may perform measurement related to the received signal. For example, the measurement section 223 may perform RRM measurement or CSI measurement based on the received signal. The measurement section 223 may measure received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmitting section and the receiving section of the user terminal 20 according to the present disclosure may be composed of at least one of the transmitting/receiving section 220, the transmission/reception antenna 230 and the communication path interface 240.

In addition, the transmitting/receiving section 220 may receive at least one of the information related to the TPMIs and the information related to the SRIs. The information related to the TPMIs may be, for example, a precoding information and number of layers field included in DCI or an explicit TPMI field, or may be notified by a higher layer signaling. The information related to the SRIs may be an SRI field included in the DCI, or may be notified by a higher layer signaling.

The control section 210 may control the digital precoding to be applied to the uplink transmission (such as PUSCH transmission) based on the information related to the TPMIs, and control the analog precoding to be applied to the uplink transmission based on the information related to the SRIs. The transmitting/receiving section 220 may transmit the uplink signal or channel to which at least one of the digital precoding and the analog precoding has been applied.

In addition, the digital precoding may be realized similar to the above-described digital beam forming. The analog precoding may be realized similar to the above-described analog beam forming. Furthermore, the digital precoding may be read as determination of a precoder that is based on a TPMI. The analog precoding may be read as determination of a precoder that is based on an SRI.

When the information related to the SRIs indicates one SRI, the control section 210 may assume to apply the same analog precoding to all panels used for the uplink transmission.

When the information related to the SRIs indicates a plurality of SRIs, the control section 210 may assume to apply different analog precoding per panel used for the uplink transmission.

When the information related to the TPMIs indicates one TPMI, the control section 210 may assume to apply the same digital precoding to all layers used for the uplink transmission.

When the information related to the TPMIs indicates a plurality of TPMIs, the control section 210 may assume to apply digital precoding in a layer group unit used for the uplink transmission.

### (Hardware Configuration)

In addition, the block diagrams used to describe the above embodiments illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as a transmitting unit or a transmitter. As described above, the method for realizing each function block is not limited in particular.

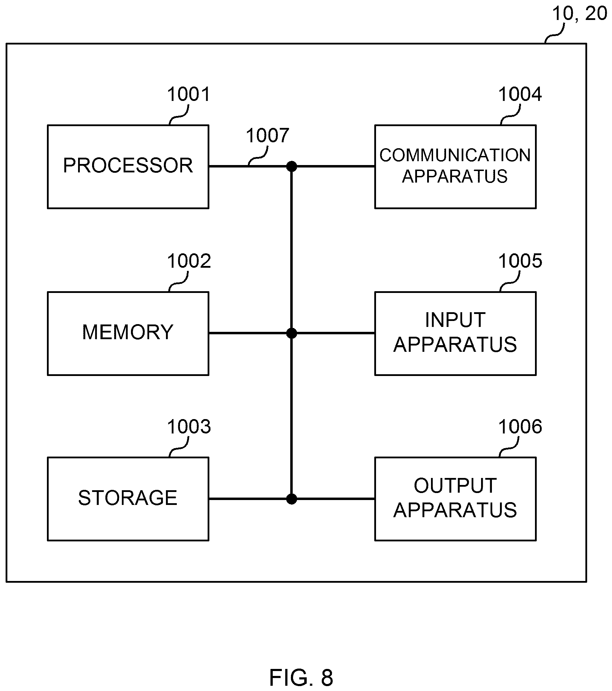

For example, the base station and the user terminal according to the one embodiment of the present disclosure may function as computers that perform processing of the radio communication method according to the present disclosure. Fig. 8 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 8 or may be configured without including part of the apparatuses.

For example, Fig. 8 illustrates the only one processor 1001. However, there may be a plurality of processors. Furthermore, processing may be executed by 1 processor or processing may be executed by 2 or more processors concurrently or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmitting/receiving section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiments are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmitting/receiving section 120 (220) and transmission/reception antennas 130 (230) may be realized by the communication apparatus 1004. The transmitting/receiving section 120 (220) may be physically or logically separately implemented as a transmitting section 120a (220a) and a receiving section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

### (Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS (Reference Signal), or may be referred to as a pilot or a pilot signal depending on standards to be applied. Furthermore, a Component Carrier (CC) may be referred to as a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as a general TTI (TTIs according to 3GPP Rel. 8 to 12), a normal TTI, a long TTI, a general subframe, a normal subframe, a long subframe or a slot. A TTI shorter than the general TTI may be referred to as a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume that given signals/channels are transmitted and received outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (such as a Physical Uplink Control Channel (PUCCH) and a Physical Downlink Control Channel (PDCCH)) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspect/embodiments described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used.

In the present disclosure, terms such as "precoding", a "precoder", a "weight (precoding weight)", "Quasi-Co-Location (QCL)", a "Transmission Configuration Indication state (TCI State)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as a transmission apparatus, a reception apparatus or a radio communication apparatus. In addition, at least one of the base station and the mobile station may be a device mounted on a moving object or the moving object itself. The moving object may be a vehicle (e.g., a car or an airplane), may be a moving object (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends to be not an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiments described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A user terminal comprising:
a receiving section that receives information related to a Transmitted Precoding Matrix Indicator (TPMI) and information related to a Sounding reference signal Resource Index (SRI); and
a control section that controls digital precoding to be applied to uplink transmission based on the information related to the TPMI, and controls analog precoding to be applied to the uplink transmission based on the information related to the SRI.

2. The user terminal according to claim 1, wherein, when the information related to the SRI indicates one SRI, the control section assumes to apply same analog precoding to all panels used for the uplink transmission.

3. The user terminal according to claim 1 or 2, wherein, when the information related to the SRI indicates a plurality of SRIs, the control section assumes to apply different analog precoding per panel used for the uplink transmission.

4. The user terminal according to any one of claims 1 to 3, wherein, when the information related to the TPMI indicates one TPMI, the control section assumes to apply same digital precoding to all layers used for the uplink transmission.

5. The user terminal according to any one of claims 1 to 4, wherein, when the information related to the TPMI indicates a plurality of TPMIs, the control section assumes to apply digital precoding in a layer group unit used for the uplink transmission.

6. A radio communication method for a user terminal comprising:
receiving information related to a Transmitted Precoding Matrix Indicator (TPMI) and information related to a Sounding reference signal Resource Index (SRI); and
controlling digital precoding to be applied to uplink transmission based on the information related to the TPMI, and controlling analog precoding to be applied to the uplink transmission based on the information related to the SRI.
